(19) Europäisches Patentamt
European Patent Office
Office européen des brevets

(11) EP 1 999 464 B1

(12) EUROPÄISCHE PATENTSCHRIFT

(45) Veröffentlichungstag und Bekanntmachung des Hinweises auf die Patenterteilung:
**19.08.2009 Patentblatt 2009/34**

(21) Anmeldenummer: **06828524.6**

(22) Anmeldetag: **17.11.2006**

(51) Int Cl.:
***G01N 29/48*** *(2006.01)*

(86) Internationale Anmeldenummer:
**PCT/DE2006/002019**

(87) Internationale Veröffentlichungsnummer:
**WO 2007/112708 (11.10.2007 Gazette 2007/41)**

(54) **MESSVERFAHREN UND -SYSTEM FÜR BAUTEILE, INSBESONDERE FÜR KOLBEN VON KOLBENMASCHINEN**

MEASURING METHOD AND SYSTEM FOR COMPONENTS IN PARTICULAR FOR PISTONS OF PISTON ENGINES

SYSTÈME ET PROCÉDÉ DE MESURE POUR PIÈCES, EN PARTICULIER POUR PISTONS DE MACHINES À PISTONS

(84) Benannte Vertragsstaaten:
**DE FR GB**

(30) Priorität: **30.03.2006 DE 102006014746**

(43) Veröffentlichungstag der Anmeldung:
**10.12.2008 Patentblatt 2008/50**

(73) Patentinhaber: **Mahle International GmbH
70376 Stuttgart (DE)**

(72) Erfinder: **SCHNELL, Holger
71665 Vaihingen/Enz (DE)**

(74) Vertreter: **Bongen, Renaud & Partner
Rechtsanwälte Notare Patentanwälte
Königstrasse 28
70173 Stuttgart (DE)**

(56) Entgegenhaltungen:
| | |
|---|---|
| **WO-A-20/05009220** | **DD-A5- 283 205** |
| **DE-A1- 10 206 760** | **JP-A- 4 125 466** |
| **US-A1- 4 036 057** | **US-A1- 4 386 526** |
| **US-A1- 5 618 994** | **US-B1- 6 492 821** |

## Beschreibung

*Technisches Gebiet der Erfindung*

Die Erfindung liegt auf dem Gebiet Messtechnik und betrifft die Vermessung von Rotationsteilen, insbesondere von Kolben für Verbrennungsmotoren und andere Kolbenmaschinen. Bei solchen Vermessungen ist es wichtig, genaue, oftmals komplexe Messungen schnell und mit möglichst geringem Aufwand zu ermitteln. Damit lässt sich beispielsweise die Eignung eines Kolbens oder anderen Rotationsteils für einen bestimmten Verwendungszweck beurteilen oder eine Qualitätsüberwachung bei der Herstellung des Bauteils durchführen.

Im vorliegenden Fall geht es um die zerstörungsfreie Vermessung und Funktionsbeurteilung der Bindung von Eingiessteilen oder ähnlichen Anordnungen in Bauteilen, insbesondere die Bestimmung der metallischen Bindung von Eingiessteilen in Kolben für Verbrennungsmotoren. Bei einer solchen Vermessung kommt es darauf an, entlang einer definierten Fläche zwischen dem Grundmaterial und dem eingegossenen oder in anderer Weise verbundenen Material die Funktion und Vollständigkeit der Bindung zu bewerten, z.B. um die Qualität des Bauteiles oder dessen Eignung für einen bestimmten Verwendungszweck zu beurteilen oder eine Qualitätsüberwachung des Herstellungsprozesses (Giesserei, Fertigung) durchführen.

*Stand der Technik*

Messungen der genannten Art können mittels Ultraschallmessmethode durchgeführt werden. Bei der automatisierten Messung von Serienteilen kommen zweckmässiger Weise häufig sog. Ultraschallmessungen im Tauchverfahren zum Einsatz. Alternativ werden Methoden in sogenannter Kontakttechnik verwendet.

Solche Messsysteme weisen zumeist folgende Bestandteile auf:

- mindestens ein Ultraschall-Gerät, ggf. mit mehreren Prüfkanälen, welches die Erzeugung von Ultraschallwellen und deren Empfang geeignet steuern und Schall-Laufzeiten geeignet auswerten kann, ggf. mit einem separaten Auswerterechner;
- eine oder mehrere Sonden ("Prüfköpfe"), welche geeignet sind, charakteristische Ultraschallwellen zu erzeugen, zu senden/emittieren, sowie zu empfangen, jeweils gekoppelt an das Ultraschall-Gerät;
- eine oder mehrere geeignete mechanische Positioniereinrichtungen für die Prüfköpfe, ggf. über Achsen bewegbar und/oder steuerbar;
- bei Verwendung des Tauchverfahrens ein Becken, das mit flüssigem Medium befüllbar ist mit einer Vorrichtung, die das zu prüfende Bauteil fixiert, sowie die Prüfköpfe beinhaltet;
- eine geeignete, ggf. bewegbare Aufnahme für das zu prüfende Bauteil.

Bei der Messung werden mittels einer an das Prüfproblem angepassten Sonde bzw. mit mehreren Sonden, geeignete Ultraschallwellen geeigneter Wellenlänge, Schallbündeldurchmesser und Ausbreitungscharakteristik erzeugt und über ein flüssiges Koppelmedium, in welches das zu prüfende Bauteil getaucht wird, in das Bauteil geleitet. Die durch das Bauteil laufenden Schallwellen werden an der Grenzfläche zum Eingiessteil teilweise reflektiert, teilweise laufen sie weiter hindurch. Die auf diese Weise reflektierten oder auch transmittierten Wellen enthalten Informationen über das Bauteilinnere, also insbesondere auch über den Zustand der Bindung, und können bezüglich Ihrer Amplitude durch einen geeigneten Empfänger - der ggf. auch im Sender integriert sein kann - bewertet werden. Dabei werden diejenigen Amplitudenanteile ausgewertet, welche einer bestimmten Laufzeit oder Laufzeitperiode zugeordnet sind entsprechend einer auszuwählenden, im Bauteil gegebenen bzw. korrelierenden Tiefen- bzw. Lageposition. Durch geeignete Relativ-bewegung der Sonde zum untersuchenden Bauteil entlang der zu untersuchenden Bindungsfläche, insbesondere durch Rotation des Bauteils und/oder der Sonde relativ zueinander, entsteht auf diese Weise ein charakteristischer Amplituden-Signalverlauf der reflektierten und/oder transmittierten Ultraschallwelle.

Der relative Amplitudensignalverlauf wie auch die absolute Amplitudenhöhe über die Messstrecke wird von zahlreichen Faktoren beeinflusst. U.a. sind dies beispielsweise die Geometrie des Bauteils und des Eingiessteils, Einflüsse des Gefüges bzw. Materials des Bauteils oder des Eingiessteils, Rauheit der Bauteiloberfläche oder der Grenzfläche zum Eingiessteil, aber auch Parameter wie die geometrische Anordnung der Komponenten zueinander sowie der Ultraschallwellen (deren Intensität, Ausbreitungscharakteristik, weitere Schallfeldgrössen, ..., usw.). Diese Einflüsse können häufig bei der Prüfung mehrerer Teile und bereits über kurze Zeiträume von wenigen Minuten unsystematisch variieren und werden als sogenannte Störeinflüsse oder Störgrössen bezeichnet. Neben diesen vielen sich überlagernden Störeinflüssen hängt der Amplitudenverlauf auch von der Ausprägung und Funktion der Bindung ab, also derjenigen Eigenschaft, die mit der Messmethode eigentlich bestimmt werden soll.

Bislang auf dem Markt befindliche Systeme können diese Störeinflüsse für komplexere Bauteile nur sehr ungenügend identifizieren und kompensieren. Dies erfolgt u.a. beispielsweise dadurch, dass mittels eines oder mehrerer Referenzteile und häufig mehrerer funktionstüchtiger Serienbauteile ein Grundpegel (durch Verstärkungseinstellung) der Amplitude bestimmt und justiert werden muss und die Dynamik und Variation bei teilweiser oder vollständig funktionsuntüchtiger Bindung ermittelt werden muss. Aus diesen Werten können sog. Grenzwerte oder Schwellenwerte definiert werden, deren Erreichen dann bei der anschliessenden Serienprüfung ein schlechtes Bauteil indizieren soll. Diese Schwellenwerte werden über die gesamte Messstrecke und/oder über eine längere Zeitspanne während der Prüfung mehrerer Bauteile meist fest gewählt oder genügen nur einer einfachen Dynamik, womit die genannten Probleme bzw. der genannte Aufwand nur unzureichend vermieden werden kann.

Der Nachteil all dieser Methoden ist der teilweise erhebliche Aufwand bei Neueinstellung des Messsystems, die in engem Zeitraster durchzuführende Überprüfung und Rekalibrierung des Systems, sowie die selbst bei optimaler Justierung durch Störeinflüsse - auch aufgrund unkritischer Variationen der Eigenschaften der Bauteile untereinander - resultierenden falschen Messergebnisse und Fehlbewertungen, notabene das Nichterkennung von Ausschussteilen oder die Verwerfung von Gutteilen.

Im US-Patent 5 618 994 (Falsetti, General Electric Corp.) ist ein Verfahren zur Ultraschall-Untersuchung von Objekten beschrieben, die innerlich eine grobe oder unregelmässige Kornstruktur besitzen, z.B. Gasturbinenteile aus speziellen Legierungen. Dazu wird ein als "Pitch-Analysis" bezeichnetes Verfahren benutzt, bei dem an jedem Muster eines Objekts zuerst eine Transmissions-Messung und danach eine Reflexions-Messung durchgeführt werden, womit aus den beiden Messungen für jedes Muster eine genaue Kalibrierung möglich wird, die sogar auf die Grösse von eventuellen Fehlstellen schliessen lässt. Der Ort der Fehlstellen bleibt jedoch unbekannt.

Im US-Patent 4 036 057 (Morais, Acoustic Emission Technology Corp.) ist ein elektronisches Verfahren und System zur automatischen Anpassung eines z.B. zur Maschinensteuerung verwendeten, akustischen Schwellwerts an vorhandene Störgeräusche beschrieben, bei dem eine elektrische Spannung erzeugt wird, die dem derzeit vorhandenen, sich mit der Zeit ändernden Störgeräusch entspricht, und diese Spannung dem fest vorgegebenen, durch eine elektrische Spannung definierten, steuernden Schwellwert hinzugefügt wird. Eine Fehlerdiagnose, die den Ort eines Fehlers in einem untersuchten Bauteil angibt, ist damit nicht möglich.

In der veröffentlichten PCT-Patentanmeldung WO 2005/009220 (Fichtinger et al., Johns Hopkins University) ist eine Ultraschall-Verfahren zur medizinischen Behandlung beschrieben, genauer eine minimal-invasive Technik mittels radioaktiver Bestrahlung zur Behandlung eines Prostatakarzinoms. Bei diesen Verfahren werden die radioaktiven Implantierungsnadeln mittels Ultraschall geführt, sobald aber ein radioktives Implantat von der Nadel gelöst ist, kann es praktisch nur noch mittels Röntgendurchleuchtung oder Fluoroskopie lokalisiert werden. Die beschriebene Lösung dieses Problems liegt in der intra-operativen Kopplung von Ultraschall- und Röntgen-Messung in der Weise, dass dem operierenden Arzt die Ergebnisse beider Messverfahren gleichzeitig und verbunden zur Verfügung stehen. Ein solches Verfahren ist für medizinische Zwecke anwendbar, es ist aber nicht erkennbar, wie es für die Fehlerbestimmung und -lokalisierung in vorzugsweise metallischen Maschinenbauteilen benutzt werden kann.

Vom beschriebenen Stand der Technik ausgehend, hat sich die Erfindung zur Aufgabe gesetzt, einerseits den Aufwand für die Einstellung zu verringern, andererseits eine universelle Methode zu finden, welche die Störeinflüsse für jede Einzelmessung minimiert und robust gegen Veränderungen von Parametern ist, welche die Amplitude beeinflussen. Auf diese Weise soll die Bewertungsqualität und Zuverlässigkeit von derartigen Messergebnissen auf ein Mass gesteigert werden, wie sie auf dem Markt erhältliche Systeme nach Stand der Technik bislang nicht erreichen.

*Die Erfindung*

Die Erfindung verfolgt das Ziel, ein System und Verfahren zur schnellen und zuverlässigen, weitgehend automatisierten Beurteilung des inneren Zustands von Bauteilen, insbesondere einer Funktionsbeurteilung der metallischen Bindung von Eingiessteilen in Bauteilen, insbesondere in Rotationsteilen wie Kolben, zu schaffen.

Diese Aufgabe wird erfindungsgemäss im Prinzip dadurch gelöst, dass die mittels einer geeignet aufgebauter Ultraschallmessmethode ermittelten Amplitudenwerte einem mehrstufigen Bestimmungsprozess unterworfen werden, welcher die systeminhärent bei der Ultraschallprüfung auftretenden Störfaktoren universell und für jede Einzelmessung minimiert.

Dazu dient gemäss der Erfindung ein Ultraschallverfahren, bei dem mittels eines speziellen Bestimmungsprozesses die gewünschten Ergebnisse ermittelt werden. Ein entsprechend der Erfindung ausgestaltetes System minimiert sowohl Fehlereinflüsse, die bei der Bedienung (speziell bei der Einstellung/Justierung) eines solchen Messverfahren systeminhärent auftreten, als auch Messfehler und Fehlbeurteilungen bei der Durchführung der Prüfung, die durch geometrische Toleranzabweichungen bzw. Unterschiede mehrerer zu vermessender Bauteile oder durch Unterschiede der Material- oder Gefügezusammensetzung sowie weiterer Störeinflüsse auftreten. Mittels eines speziellen Bestimmungsprozesses erfolgt der wesentliche Teil der Kalibrierung und Justierung des Verfahrens vollautomatisch und selbstjustierend, insbesondere für jedes einzelne Bauteil individuell. Damit gewährleistet das Verfahren neben einem reduzierten Bediener- und Fehlereinfluss auch eine erhebliche Reduzierung des Einstellaufwandes im Vergleich zu einer Messeinrichtung nach dem Stand der Technik.

Auf diese Weise wird ohne Verwendung von mehreren Einstell- und Serienbauteilen, sowie ohne Durchführung eines spezifischen Justierprozesses (ein grobes Justieren reicht aus) und ohne regelmässig in relativ kurzen Zeitabständen zu wiederholende Kalibrierung eine hohe Verlässlichkeit der Funktionsbeurteilung des Bauteils bezüglich der Bindungscharakteristik ermöglicht. Dies bedeutet, diejenigen Anteile zu identifizieren, quantitativ zu bestimmen und dann zu eliminieren, welche einer gestörten bzw. funktionsfähigen Bindung zuzuordnen sind.

Toleranzen, wie Bauteilgeometrie und andere Einflüsse, die sich unvermeidbar von Bauteil zu Bauteil individuell unterscheiden und die Messergebnisse verfälschen, werden durch das erfindungsgemässe Verfahren kompensiert. Auf diese Weise wird eine deutlich verbesserte Messprozesssicherheit erreicht, wie sie mit Methoden nach dem Stand der Technik bislang nicht möglich waren und der Anteil falscher Beurteilungen wird deutlich reduziert.

Am einfachsten lässt sich der Vorteil des erfindungsgemäßen Verfahrens anhand einiger Zahlenwerte zeigen. So ist bei Methoden, die nach Stand der Technik arbeiten, ein Rekalibrierungsaufwand von etwa 10 Minuten bezogen auf die Messung von 1000 Bauteilen notwendig, respektive der erforderlichen Nachbeurteilung von Ausschussteilen. Bei Verwendung des erfindungsgemässen Verfahrens entfällt dieser Aufwand, solange sich der Bauteiltyp nicht verändert. Bezüglich der Messprozesssicherheit und dem Anteil von falschen Beurteilungen (sogenanntem "Pseudoausschuss") belegen aufwändige Untersuchungen, dass durch die Anwendung des erfindungsgemässen Verfahrens eine Reduzierung der betreffenden Ausschussquote absolut um mindestens 0,5% erzielt werden kann, bezogen auf die Gesamtzahl der produzierten Serienteile. Bei ungünstigen Rahmenbedingungen wie z.B. Schwankungen der Bauteilgeometrie sind auch weit höhere Reduzierungen erreichbar.

Einzelheiten der Erfindung können den Patentansprüchen entnommen werden; ein Ausführungsbeispiel der Erfindung ist nachfolgend detailliert beschrieben.

*Ausführungsbeispiel*

Ein Ausführungsbeispiel mit einem rotationssymmetrischen Bauteil wird nun in Verbindung mit den Zeichnungen näher beschrieben.

In den Zeichnungen zeigen:

Fig. 1    eine schematische Ansicht eines handelsüblichen Mess-Systems, wie es auch für die Erfindung benutzt werden kann;

Fig. 2a    ein Kolben eines Verbrennungsmotors als typisches Bauteil für die Anwendung des erfindungsgemässen Verfahrens im Schnitt;

Fig. 2b    die Draufsicht auf den in Fig. 2a gezeigten Kolben;

Fig. 3a    einen "Ideal-Messwertverlauf" über den Umfang ermittelter Amplitudenwerte;

Fig. 3b    einen tatsächlichen Verlauf über den Umfang ermittelter Amplitudenwerte, verfälscht durch eine langwellige Überlagerung;

Fig. 4a    einen Verlauf für ein tatsächlich fehlerfreies, aber nach dem Stand der Technik vermessenes und dabei als fehlerhaft ausgeschiedenes Teil;

Fig. 4b    einen Verlauf für ein tatsächlich fehlerhaftes, aber nach dem Stand der Technik vermessenes und dabei als fehlerfrei markiertes Teil;

Fig. 5a    den Verlauf für dasselbe (fehlerfreie) Teil wie in Fig. 4a gezeigt, das aber mit dem erfindungsgemässen Verfahren vermessen und dabei richtig als fehlerfrei erkannt wurde;

Fig. 5b    den Verlauf für dasselbe (fehlerhafte) Teil wie in Fig. 4b gezeigt, das aber mit dem erfindungsgemässen Verfahren vermessen und dabei richtig als fehlerhaft erkannt wurde;

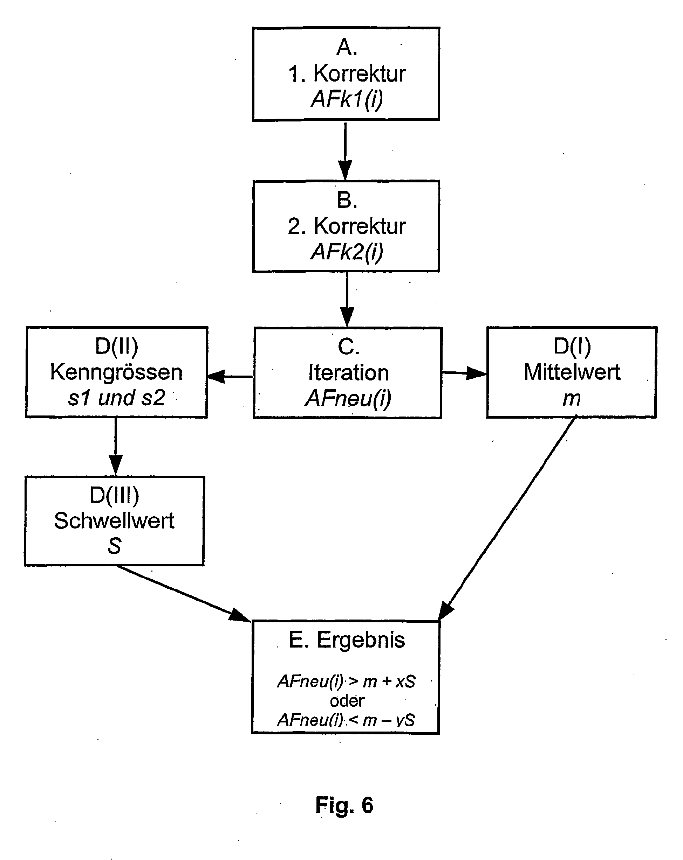

Fig. 6    das erfindungsgemässe Verfahren als Ablaufdiagramm.

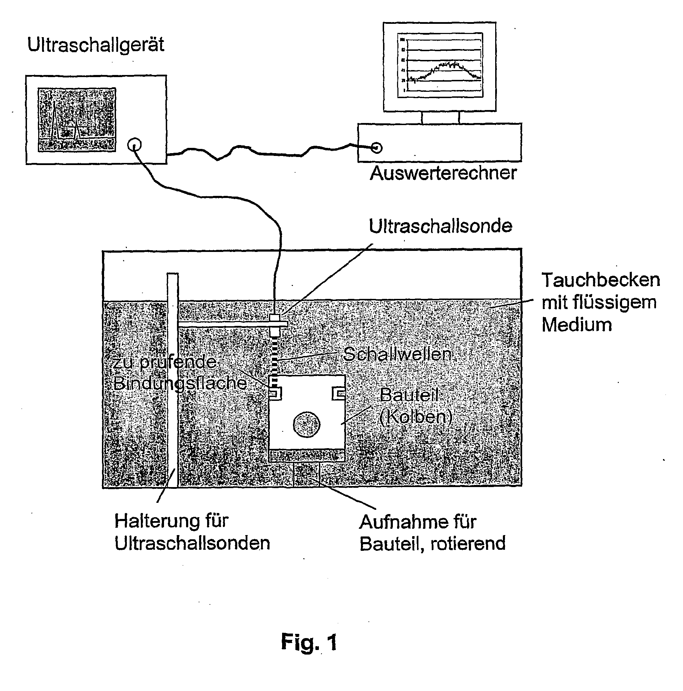

In Fig. 1 ist eine schematische Darstellung eines handelsüblichen Messsystems gezeigt. Die wesentlichen Bestandteile sind:

- ein Ultraschallgerät, welches die Erzeugung von Ultraschallwellen und deren Empfang steuern und Schall-Laufzeiten auswerten kann;

- • ein elektronischer Verarbeitungs- und Auswerterechner (z.B. ein
- • handelsüblicher PC), welcher die Amplitudensignale, die einer definierten Ultraschall-Laufwegstrecke zuzuordnen sind, über die zu prüfende Bindungsfläche des Bauteils auswerten und darstellen kann;
- • eine mit dem Ultraschallgerät verbundene Ultraschallsonde ("Prüfkopf"), welche charakteristische Ultraschallwellen senden und empfangen kann;
- • eine verfahrbare Halterung für die Ultraschallsonde;
- • ein Tauchbecken mit einem flüssigen Medium; und
- • im Beispiel eine im Tauchbecken installierte, motorisch drehbare Aufnahme, hier ein Drehtisch, zur Aufnahme des zu prüfenden Bauteils.

Es sei darauf hingewiesen, dass, wie jede mit der Technologie vertraute Person feststellen wird, die Darstellungen weder massstabsgetreu noch vollständig sind, sondern allein dazu dienen sollen, die Erfindung zu erläutern.

Im Tauchbecken, das mit einem geeigneten Medium, hier Wasser, gefüllt ist, befindet sich das zu prüfende Bauteil, hier ein schematisch dargestellter Kolben für einen Verbrennungsmotor, auf einer Aufnahmevorrichtung, hier einem motorisch angetriebenen Drehtisch. Ebenfalls im Tauchbecken angeordnet ist eine einstellbare Halterung für eine Ultraschallsonde, die auf die zu prüfende Bindungsfläche des Kolbens gerichtet ist. Diese Halterung kann natürlich auch ausserhalb des Tauchbeckens angeordnet sein und/oder es können mehrere Sonden Verwendung finden. Wenn der Kolben gedreht wird, bewegt sich diese Bindungsfläche durch den Schallbereich der Sonde. Die Sonde ist mit einem Ultraschallgerät verbunden, das sowohl die Anregung bzw. Steuerung der Sonde erlaubt, als auch deren Ausgangssignal verarbeitet. Der Ausgang des Ultraschallgeräts wiederum ist mit einem Auswerterechner verbunden, der die Verarbeitung der ermittelten Werte durchführt. Der Auswerterechner kann ein handelsüblicher PC sein, der mit dem entsprechenden Programm geladen ist.

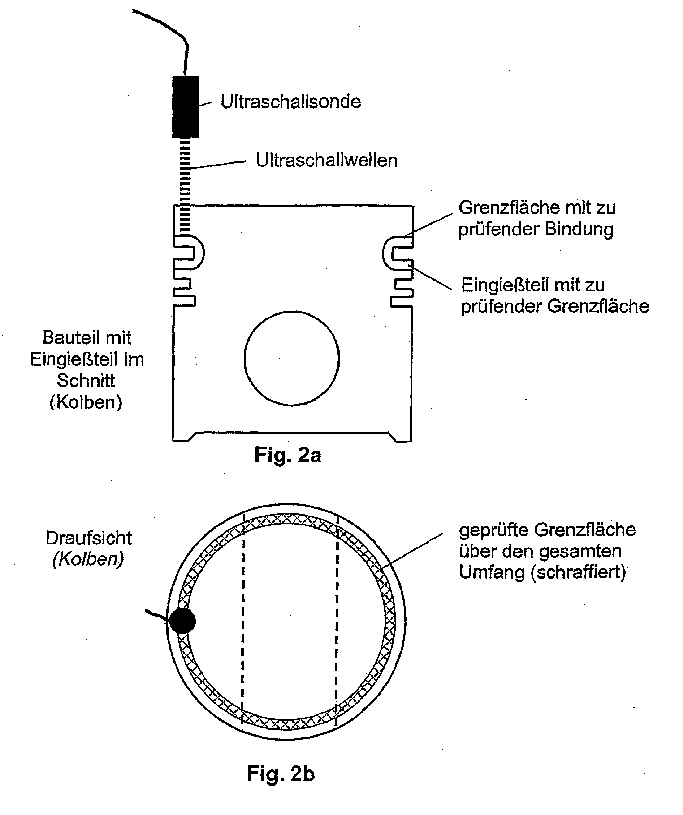

Auf dem Drehtisch findet die Ausrichtung und "Abtastung" der zu prüfenden Bindung innerhalb des Kolbens statt, der als typisches Bauteil in Fig. 2 genauer gezeigt und im Zusammenhang mit dieser Figur beschrieben ist. Dieses im Prinzip rotationssymmetrische Bauteil wird auf dem Drehtisch ausreichend stabil aufgesetzt und fixiert. Die Sonde ist, bzw. die Sonden sind während der Drehung des Kolbens fest positioniert und befinden sich typischerweise im Tauchbecken wenige Zentimeter von der Bauteiloberfläche entfernt. Die Positionierung ist so gewählt, dass der emittierte Schall, der durch das Bauteil läuft, an der zu prüfenden Grenzfläche zum Eingiessmaterial (siehe Fig. 1 und 2) auftrifft.

In Fig. 2a ist ein als Beispiel gewählter Kolben für einen Verbrennungsmotor mit einem Eingiessteil für den obersten Kolbenring im Schnitt dargestellt. Derartige Kolben werden für Dieselmotoren und hochbelastete Ottomotoren verwendet. Geprüft werden soll die Bindung an der Grenzfläche des Eingiessteils (üblicherweise eine Eisenlegierung) mit dem Kolben (üblicherweise eine Aluminiumlegierung) mittels der Ultraschallsonde. Das Tauchbad ist in den Fig. 2a und 2b nicht gezeigt.

Fig. 2b zeigt den gleichen Kolben wie Fig. 2a, jedoch in Draufsicht. Die zu prüfende Grenzfläche zwischen dem Eingiessteil ist schraffiert dargestellt. Die ortsfest justierte Ultraschallsonde tastet diese Grenzfläche ab, wenn der Kolben um seine Mittelachse gedreht wird.

Der an der Bauteiloberfläche wie auch an der Grenzfläche teilweise reflektierte Schall wird von der Ultraschallsonde; also vom selben "Prüfkopf" empfangen, es ist also ein Reflexionsverfahren, das hier angewendet wird: Wird eine Transmissions- oder Durchschallungsmethode als Alternative angewandt, kann der Ultraschall, welcher die Grenzfläche passiert, durch einen weiteren Prüfkopf oder Ultraschallempfänger aufgenommen werden. Die weitere Verarbeitung der aufgenommenen Werte ist bei beiden Verfahren prinzipiell gleich, natürlich den aufgenommenen Signalen angepasst.

Durch Laufzeitauswertung wird diejenige Amplitude bestimmt, welche in korreliertem Abstand zur Bauteiloberfläche registriert wird. Bei konstanter Drehgeschwindigkeit des Drehtisches mit dem Objekt bewegt sich das an der Grenzfläche auftreffende Schallbündel entlang des Umfangs. Die an der Position der Grenzfläche zurücklaufenden Wellenamplituden werden über den Umfang - d.h. über die Messstrecke - dargestellt. Bei einer linearen Abtastung erfolgt die Darstellung entsprechend.

Für eine optische Darstellung wird dabei die Amplitudenhöhe so skaliert, dass Sie für die Aufnahme des reflektierten Anteils in etwa zwischen ca. 10% bis 30% der Bildschirmhöhe für eine intakte Bindung einnimmt und im Falle der Auswertung des transmittierten Anteils ca. 90 bis 70% Bildschirmhöhe.

Das auf diese Weise erhaltene Diagramm wird nun erfindungsgemäss einem mehrstufigen Bestimmungsprozess unterworfen:

Ausgangspunkt ist die gemessene Amplitudenfunktion *AF(Messort)*. Die Messwerte entsprechen den Amplitudenmaxima, welche von den Wellen-paketen herrühren, die der Umgebung der Grenzfläche zuzuordnen sind. Der Messort bezeichnet im Falle eines rotationssymmetrischen Bauteils den Umfangsort von der Sonde relativ zum Bauteil, welcher vorteilhaft als Winkelposition der Sonde relativ zum Bauteil beschrieben wird. Bei konstanter relativer Drehung von Sonde zu Bauteil und daraus resultierenden äquidistanten Winkelabschnitten können die Messorte aber auch vereinfachend durch durchnummerierte Indizes ersetzt werden. Solche durchnummerierte Indizes können analog auch bei einer linearen Abtastung verwendet werden.

*AF(Messort) →AF(Nummer 1...n)*

Es hat sich als nützlich erwiesen, bei Rotationsteilen mit bis zu ca. 200 mm Durchmesser mindestens 1000 Messwerte (n = 1000) über den Teileumfang aufzunehmen.

Bei grossen Bauteilen und/oder gewünschten grossen Auflösungen kann es erforderlich sein, weit mehr Messwerte über den Umfang oder die Länge des Bauteils aufzunehmen.

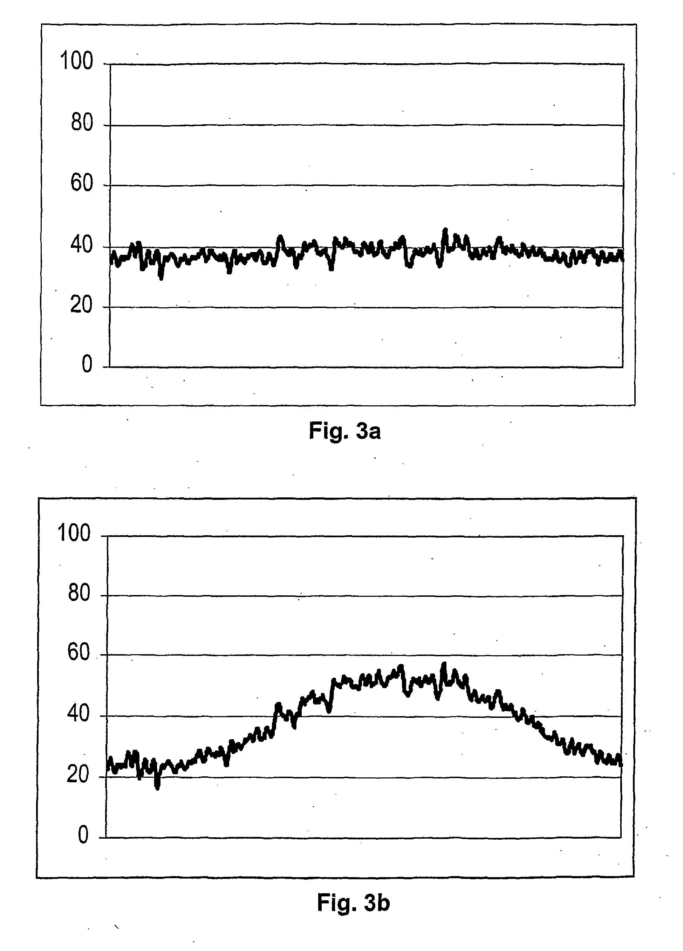

Die in den Figuren 3a, 3b bis 5b, 5b dargestellten Kurven sind in einem Reflexionsverfahren gemessene Amplitudenfunktionswerte *AF(Messort)* über den Umfang eines Bauteils, hier, eines Kolbens. Sie sind zur Darstellung so vereinfacht, dass das erfindungsgemässe Prinzip klar wird. Insbesondere sind der Anschaulichkeit halber Schwellenwerte dargestellt, die im

Formverlauf variieren. Den gleichen Effekt erhält man, wenn analog die Amplitudensignale in ihrer Form verändert werden, und genauso wie bei Verfahren, die nach Stand der Technik arbeiten, mit geradlinigen Schwellen gearbeitet wird.

Fig. 3a zeigt als Beispiel einen idealen Verlauf von über den Umfang ermittelten Amplitudenwerten, wie er beispielsweise bei der beschriebenen Prüfung eines Kolbens dann ermittelt wird, wenn keine Bindungsfehlstellen vorhanden sind, der Kolben korrekt ausgerichtet ist und keine sonstigen Störquellen vorhanden sind.

In Fig. 3b ist demgegenüber ein Verlauf ermittelter Amplitudenwerte des gleichen Kolbens wie in Fig. 3a, jetzt aber mit einer typischen niederfrequenten Überlagerung, wie sie beispielsweise durch eine Desachsierung des Bauteils in der Aufspannvorrichtung auftreten kann.

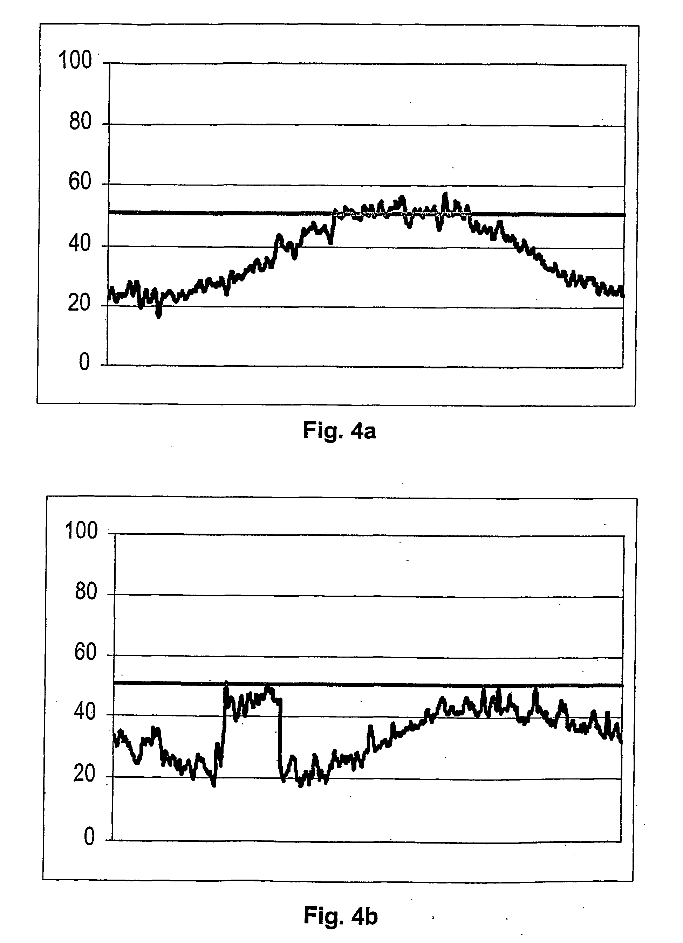

Fig. 4a zeigt nun die Anwendung eines konstanten Schwell- oder Grenzwerts gemäss dem Stand der Technik auf die in Fig. 3b dargestellte Kurve. Der eingestellte Grenzwert von 50% wird überschritten, womit das Bauteil als fehlerbehaftet und damit - fälschlicherweise - als Ausschuss markiert wird.

Andererseits zeigt Fig. 4b einen Kolben mit einem Bindungsfehler, der in diesem Fall ebenfalls in Kombination mit einer niederfrequenten Störung auftritt, und zwar ungünstiger Weise im Wellental dieser Störung. Wie gezeigt, wird der Bindungsfehler bei Anwendung eines konstanten Schwell-oder Grenzwerts gemäss dem Stand der Technik nicht erkannt, da der eingestellte Grenzwert von 50% nicht überschritten wird.

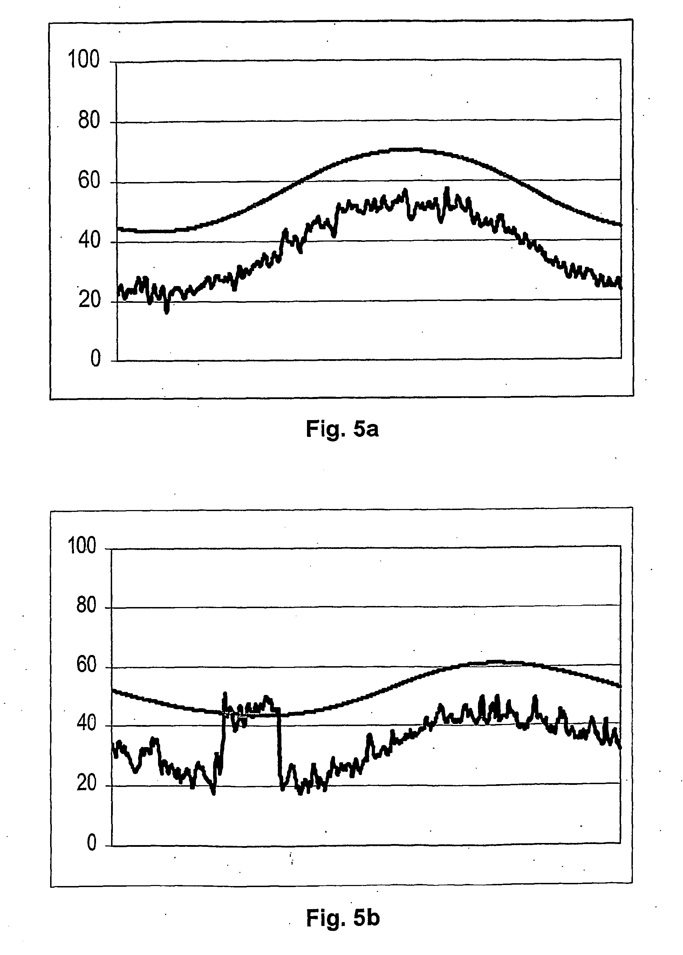

Die Figuren 5a und 5b verdeutlichen den Effekt des erfindungsgemässen Verfahrens. Durch die Anwendung eines "formvariablen Schwellwerts" gelingt die einwandfreie Klassifizierung des geprüften Bauteils als fehlerfrei (Fig. 5a) bzw. fehlerbehaftet (Fig. 5b).

Sind an der Eintrittsfläche des Bauteils von der ebenen und die Schallbrechung nicht beeinflussenden Geometrie abweichende Strukturen vorhanden, so kann es sinnvoll oder sogar erforderlich sein, diese Strukturen im Amplitudenverlauf unberücksichtigt zu lassen. Zu diesem Zweck können einzelne oder mehrere Ausblendungsabschnitte definiert werden. Das Erkennen und Setzen dieser Ausblendungen kann manuell erfolgen; eine "halbautomatische" Ausblendung durch geeignete Algorithmen, wie nachfolgend beschrieben, ist aber vorzuziehen.

Konkret bedeutet dies, dass von den *AF(1...n)* eine oder mehrere Ausblendzonen definiert werden, die sich jeweils durch die Beginnnummer des Ausblendwertes und die Endnummer klassifizieren lassen. Da es sich in diesem Fall um äusserlich relativ einfach erkennbare und identifizierbare Bereiche am Bauteil handelt, ist eine manuelle Bestimmung dieser Zonen einfach möglich. Dies kann durch Heranziehen der Amplitudenfunktion geschehen, da sich geometrische Anomalien an der Bauteiloberfläche häufig durch starke Änderung in der Funktion *AF* bemerkbar machen.

Die *AF(1...n)* werden dann folgendem ersten Korrekturprozess unterzogen: Der Bereich, der zwischen auszublendender Beginnnummer und der zugehörigen Endnummer liegt, wird durch die linear interpolierten Werte ersetzt.

Betrachtet sei ein Ausblendbereich, der an der Stelle *u1* beginnt und bei *u2* endet. Dann berechnet sich die korrigierte Amplitudenfunktion wie folgt:

$$AFk1(i) = \begin{cases} AF(i), & i < u1 \vee i > u2 \\ AF(u1) + \dfrac{i-u1}{u1-u2}\big(AF(u1) - AF(u2)\big), & u1 \le i \le u2 \end{cases}$$

Bei mehreren Ausblendbereichen gilt dies entsprechend. Ergebnis ist die so erhaltene, einfach korrigierte Amplitudenfunktion *AFk1(1...n).*

Offensichtlich kann der eben beschriebene erste Korrekturschritt dann entfallen, wenn das Bauteil zumindest in der gemessenen Ebene keine Unterbrechungen oder sonstige Inhomogenitäten aufweist. Bei Kolben für Verbrennungsmotoren und ähnliche Anwendungen (Kompressoren, Pumpen) ist dies eher die Ausnahme. Am einfachsten ist es dann, den ersten Korrekturschritt einfach zu überspringen und mit dem zweiten Korrekturschritt zu beginnen.

Weitere Störeinflüsse, die eingangs bereits erwähnt wurden, können zur Überlagerung der Amplitudenfunktion mit längerwelligen Anteilen führen. Aufgabe des zweiten Korrekturprozesses ist die Eliminierung dieser Störeinflüsse.

Im idealen Fall erfolgt diese Eliminierung durch Anwendung eines Gaussfilters. Vereinfachend und näherungsweise kann statt dessen der Korrekturprozess aber auch durch ein doppeltes Mittelwertfilter durchgeführt werden, welches sich durch sehr einfache analytische Anwendbarkeit und Durchführbarkeit auszeichnet.

Für den Transformationsprozess werden dabei aus der Amplitudenfunktion folgende Hilfsfunktionen berechnet:

$$H1(i) = \frac{1}{2L+1} \sum_{i-L}^{i+L} AFk1(j)$$

Und im zweiten Schritt

$$H2(i) = \frac{1}{2L+1} \sum_{i-L}^{i+L} H1(j)$$

mit einer optimierten Grenzwellenlänge dieses Filters von typischerweise L = 9100/n, worin n die Anzahl der Messwerte ist. Es kann erforderlich sein, diese Grenzwellenlänge dem Prüfproblem anzupassen und modifizierte Werte für L zu wählen.

Aus den Hilfsfunktionen $H2(i)$ berechnet sich die Amplitudenfunktion vermöge:

$$AFk2(i) = AFk1(i) - H2(i)$$

Die entscheidende Leistungsfähigkeit der hier ausgeführten Korrekturprozesse zur Eliminierung von Störeinflüssen liegt in der nachgeschalteten Plausibilitätsprüfung begründet, die nachfolgend beschrieben wird. Der oben beschriebene zweite Korrekturprozess kann nämlich dazu führen, dass nicht nur Störeinflüsse, die sich im Amplitudenverlauf auswirken, beseitigt werden, sondern auch Einflüsse, die von Bindungsfehlern herrühren.

Es wurde festgestellt, dass Bindungsfehlern herrührende Einflüsse dazu führen, dass sich die Unordnung oder "Entropie" der resultierenden Amplitudenfunktion $AFk2(i)$ im Vergleich zur Vorstufe der Korrektur $AFk1(i)$ erhöht.

Als einfaches Mass für die oben genannte Unordnung oder Entropie wird bestimmt, wie sich der gesamte Werteverlauf der jeweiligen Amplitudenfunktionen auf die Ordinatenabschnitte aufteilt. Diese können z.B. in zehn Abschnitte von 0 bis 100% der Amplitudenhöhe gruppiert werden. Es wird quasi eine Art Histogrammfunktion der Messwerte erzeugt und diese Histogrammfunktionen miteinander verglichen.

Der Vergleich findet nun mit folgendem iterativen Verfahren statt: Für den Fall, dass die Anzahl der "besetzten" Ordinatenabschnitte der Funktion $AFk1(i)$ kleiner als die der Funktion $AFk2(i)$ ist, was eine Zunahme der Unordnung oder Entropie anzeigt, wird der durchgeführte zweite Korrekturprozess hierfür wieder rückgängig gemacht. Als besetzt gilt ein Segment dann und nur dann, wenn eine Mindestanzahl aller Messwerte in dem jeweiligen Segment liegen. Im hier beschriebenen Beispiel müssen 0,5% aller Messwerte in einem Segment auftreten, damit es als "besetzt" klassifiziert wird.

Mittels dieses iterativen Verfahrens erhält man schliesslich aus den ursprünglichen Messwerten $AF(i)$ über die Korrekturfunktionen $AFk1(i)$ und $AFk2(i)$ neue korrigierte Amplitudenfunktion $AFneu(i)$.

Nach diesen drei durchgeführten Korrekturprozessen kann nun der eigentliche Bestimmungsprozess, d.h. die Identifizierung nichtfunktionsfähiger Bindungsanteile am Bauteil, erfolgen.

Hierzu wird mittels des im folgenden beschriebenen Verfahrens ein Schwellwert berechnet, dessen Überschreitung (bei der Reflexionsmethode) bzw. Unterschreitung (bei der Transmissionsmethode) durch die Amplitudenwerte der Funktion $AFneu(i)$ an diesen Stellen eine nichtfunktionsfähige Bindung an der Stelle/Nummer i bzw. dem dadurch bestimmbaren Messort angezeigt wird.

Erste Stufe des Bestimmungsprozesses für den Schwellwert ist die Berechnung des Mittelwertes über alle $AFneu(i)$, allerdings ohne Berücksichtigung der o.g. Ausblendebereiche $u1$ bis $u2$ (und ggf. weiterer Ausblendbereiche).

Der Einfachheit halber wird im Folgenden davon ausgegangen, dass nur ein Ausblendbereich vorliegt. Bei Vorliegen mehrerer Ausblendbereiche können die nachfolgenden genannten Formeln aber sehr einfach erweitert werden.

Berechnet werden folgende Kenngrössen:

$$m = \frac{1}{n - u2 + u1} \sum_{i=0}^{i=n} AFneu(i), \; i < u1 \vee i > u2$$

$$s1 = \frac{1}{n - u2 + u1} \sum_{i=0}^{i=n} \left| \left( \frac{1}{n - u2 + u1} \sum_{i=0}^{i=n} AFneu(i) \right) - AFneu(i) \right|, \; i < u1 \vee i > u2$$

$$s2 = \frac{1}{n - u2 + u1} \sum_{i=0}^{i=n} \left| \left( \frac{1}{n - u2 + u1} \sum_{i=0}^{i=n} AFneu(i) \right) - AFneu(i) \right|, (i < u1 \vee i > u2) \wedge i \neq i_Q$$

iQ sind dabei alle Messorte, für die *AFneu(iQ)* grösser ist, als 80% aller verbleibenden *AFneu(i)* sowie kleiner ist, als 80% aller verbleibenden *AFneu(i)*. Das bedeutet, dass der entsprechende Anteil der grössten und kleinsten Amplitudenwerte bei der Summenbildung für 52 nicht berücksichtigt wird. Hieraus berechnet sich die Kenngrösse

$$S = \begin{cases} s2 & s1 < 7 \wedge 1,5 < s2 < 3,0 \\ 1,5 & s1 < 7 \wedge s2 < 1,5 \\ 2 & s1 \geq 7 \\ 3,0 & s1 < 7 \wedge s2 > 3,0 \end{cases}$$

Diese Werte ergeben sich aus signaltheoretischen Überlegungen von zuzulassenden Nutz-/Störsignalverhältnissen, können aber auch empirisch ermittelt werden. Die Werte sind nahezu unabhängig vom Prüfproblem und universell gültig; allerdings kann im Einzelfall eine Modifikation sinnvoll sein.

Mittels dieser Kenngrössen lassen sich schliesslich diejenigen Amplitudenwerte identifizieren, die eine nichtfunktionsfähige Bindung anzeigen. Bei der Reflexionsmethode sind dies alle Umfangsstellen *i*, für die gilt:

$$AFneu(i) > m + 10 * S$$

Bei der Transmissionsmethode entsprechend alle Umfangsstellen *i*, für die gilt:

$$AFneu(i) < m - 10 * S$$

Die so identifizierten Stellen können nun geeignet dargestellt werden, insbesondere bezüglich Ihrer Länge, ähnlich den Verfahren, die nach Stand der Technik arbeiten. Diese Methode wird für jede Messung und ggf. jeden Prüfkopf neu angewandt und funktioniert sehr universell.

Die einzelnen Schritte des Verfahrens werden vorteilhafterweise auf einem handelsüblichen PC oder anderem Computer als Rechenoperationen mittels eines Programms durchgeführt. Es versteht sich von selbst, dass ein solcher Computer in seiner Leistung den Erfordernissen genügen muss. Das Programm kann in an sich bekannter Weise auf einem geeigneten Medium gespeichert sein oder über ein Netzwerk zur Verfügung gestellt werden und wird dem PC in passender Form zugeführt. Ein solches Programm enthält dann auch die beschriebenen Iterationen, die natürlich auf einem Computer schnell und mit geringem Aufwand durchgeführt werden können.

Es liegt auf der Hand, dass durch dieses Verfahren Störeinflüsse, aber auch Fehler, die durch Unachtsamkeit des Bedieners, mangelnde Qualifikation oder mechanische Ungenauigkeiten auftreten können, praktisch ausgeschlossen sind oder kompensiert werden. Daraus ergibt sich auch die wesentlich höhere Reproduzierbarkeit der Messergebnisse als bei Anwendung bisheriger Verfahren und insbesondere eine hervorragende Langzeitstabilität des Messprozesses. Dazu kommt noch, dass Anpassungen an veränderte Messvoraussetzungen und/oder Bauweisen der zu messenden Rotationsteile durch die Universalität des Verfahrens von der Software normalerweise automatisch berücksichtigt werden und nur bei Verwendung völlig anderer Bauteile die Veränderungen der verwendeten Software schnell und üblicherweise sehr ökonomisch durchgeführt werden können.

Das erfindungsgemäße Verfahren ist natürlich nicht auf Systeme mit relativ fester Sonde und rotierendem Messobjekt beschränkt, sondern lässt sich auf andere Systeme anwenden, bei der die Bindung mittels Ultraschall zu bestimmen ist, indem in anderer Weise eine Relativbewegung zwischen Sonde und Messobjekt erzeugt wird.

Gerade wegen seiner relativen Einfachheit ist das erfindungsgemässe Prinzip auch geeignet zur Messung von Rotationsteilen, die unter ähnlichen Voraussetzungen wie die im Beispiel beschriebene Messung an Kolben durchgeführt werden. Der Fachperson sollte es keine Schwierigkeiten bereiten, das für Kolben, d.h. ein Rotationsbauteil, beschriebene Ausführungsbeispiel in einer Weise zu modifizieren, dass es für ähnliche Messungen an anderen Körpern, auch solchen mit notwendigen Bindungsprüfungen von längserstreckten Bindungsflächen, geeignet ist und dabei die gleichen Vorteile wie bei der beschriebenen Anwendung erzielt werden.

**Patentansprüche**

1.  Verfahren zur zerstörungsfreien Vermessung und Funktions-beurteilung der Bindung von Eingießteilen oder ähnlichen Anordnungen in Bauteilen durch rotatorische oder translatorische Relativ-bewegung zwischen einem Prüfkopf und dem Bauteil, insbesondere zur Prüfung der Bindung von Eingießteilen in Rotationsbauteilen, z.B. Kolben für Verbrennungsmotoren und andere Kolbenmaschinen, mit Ultraschall im Reflektions- oder Transmissionsverfahren, **dadurch gekennzeichnet, dass**
    die bei der Vermessung ermittelte, positions- und/oder winkelabhängige Amplitudenfunktion $AF1(i)$ mit Istwerten $AF(1...n)$, worin $AF$ den Wert selbst und $i = 1...n$ die Position, an der dieser Wert gemessen wurde, darstellen, einem Bestimmungsprozess mit folgenden Schritten unterworfen wird:

    A. in einem ersten Korrekturprozess wird zur Ausblendung bzw. Interpolation der Istwerte eines oder mehrerer Ausblendbereiche des Bauteils, an denen Inhomogenitäten der Oberfläche, insbesondere Unterbrechungen, auftreten,
    wobei jeder Ausblendbereich definiert wird durch einen ersten Positionswert, der Beginnnummer $u1$, und einen zweiten Positionswert, der zugehörigen Endnummer $u2$ des Bereichs, eine einfach korrigierte Amplitudenfunktion $AFk1(i)$ ermittelt

$$AFk1(i) = \begin{cases} AF(i), & i < u1 \lor i > u2 \\ AF(u1) + \dfrac{i-u1}{u1-u2}\big(AF(u1) - AF(u2)\big), & u1 \le i \le u2 \end{cases};$$

    B. in einem zweiten Korrekturprozess werden die durch Überlagerung langwelliger Anteile hervorgerufenen Störeinflüsse durch Anwendung eines Gauss-Filters eliminiert und damit eine zweifach korrigierte Amplitudenfunktion $AFk2(i)$ ermittelt;
    C. mittels eines iterativen Verfahrens wird die Änderung der Entropie der zweifach korrigierten Amplitudenfunktion $AFk2(i)$ gegenüber der einfach korrigierten Amplitudenfunktion $AFk1(i)$ in der Weise ermittelt, dass die einfach korrigierte Amplitudenfunktion $AFk1(i)$ in ein erstes Histogramm mit einer gegebenen Anzahl Klassen und die zweifach korrigierte Amplituden-funktion $AFk2(i)$ in ein zweites Histogramm mit der gegebenen Anzahl Klassen umgewandelt wird, dass danach für jedes Histogramm die Anzahl von Klassen ermittelt wird, die mit einer vorgegebener Anzahl von Messwerten besetzt sind, und dass diejenige Amplitudenfunktion als neue korrigierte Amplitudenfunktion $AFneu(i)$ zur weiteren Verarbeitung ausgewählt wird, deren Histogramm die kleinere Anzahl von mit Messwerten besetzten Klassen aufweist und damit insgesamt die kleinere Entropie aufweist;
    D. es wird ein Schwellwert S berechnet, dessen Überschreitung bei Anwendung der Reflexionsmethode bzw. dessen Unterschreitung bei Anwendung der Transmissionsmethode durch die Amplitudenwerte $AFneu(i)$ an diesen Stellen eine funktionsunfähige Bindung an der Stelle/Nummer $i$ anzeigt, wobei dieser Schwellenwert bestimmt wird, indem

(I) der Mittelwert m über alle $AFneu(i)$ ohne die Ausblendbereiche zwischen den Positionswerten $u1$ und $u2$ und ggf. weiterer Ausblendbereiche berechnet wird

$$m = \frac{1}{n-u2+u1} \sum_{i=0}^{i=n} AFneu(i), \, i < u1 \lor i > u2$$

(II) folgende Kenngrössen $s1$ und s2 ermittelt werden:

$$s1 = \frac{1}{n-u2+u1} \sum_{i=0}^{i=n} \left| \left( \frac{1}{n-u2+u1} \sum_{i=0}^{i=n} AFneu(i) \right) - AFneu(i) \right|, \, i < u1 \lor i > u2$$

$$s2 = \frac{1}{n-u2+u1} \sum_{i=0}^{i=n} \left| \left( \frac{1}{n-u2+u1} \sum_{i=0}^{i=n} AFneu(i) \right) - AFneu(i) \right|, (i < u1 \lor i > u2) \land i \neq i_Q \, ,$$

worin iQ alle Messorte kennzeichnen, für die $AFneu(iQ)$ größer ist als ein erster vorgegebener Prozentsatz aller verbleibenden $AFneu(i)$ ist, sowie kleiner ist als ein zweiter vorgegebener Prozentsatz aller verbleibenden $AFneu(i)$ und
(III) daraus der Schwellwert $S$ ermittelt wird gemäss folgender Formel

$$S = \begin{cases} s2 & s1 < d \land a < s2 < b \\ a & s1 < d \land s2 < a \\ c & s1 \geq d \\ b & s1 < d \land s2 > b \end{cases}$$

worin $a$, $b$, $c$ und d abhängig vom zu vermessenden Bauteil und zur untersuchten Bindung gewählte Werte sind; und
E. mittels des Schwellwerts S und des Mittelwerts $m$ diejenigen Amplitudenwerte identifiziert werden, die eine funktionsunfähige Bindung anzeigen, wobei bei der Reflexionsmethode dies insbesondere diejenigen Stellen/ Nummern $i$ sind, für die $AFneu(i) > m + xS$ gilt, während bei der Transmissionsmethode dies insbesondere diejenigen Stellen/Nummern $i$ sind, für die $AFneu(i) < m - yS$ gilt, worin $x$ und $y$ Konstanten sind.

2. Verfahren nach Anspruch 1, *dadurch gekennzeichnet, dass*
statt des zweiten Korrekturprozesses mittels eines Gauss-Filters ein Korrekturprozess mittels eines doppeltes Mittelwertfilters in der Weise durchgeführt wird, dass aus der korrigierten Amplitudenfunktion *AFk1 (i)* eine erste Hilfsfunktion

$$H1(i) = \frac{1}{2L+1} \sum_{i-L}^{i+L} AFk1(j)$$

daraus in einem zweiten Schritt eine zweite Hilfsfunktion

$$H2(i) = \frac{1}{2L+1} \sum_{i-L}^{i+L} H1(j)$$

und aus den zwei Hilfsfunktionen die zweifach korrigierte Amplitudenfunktion

$$AFk2(i) = AFk1(i) - H2(i)$$

ermittelt werden.

3. Verfahren nach Anspruch 1 oder 2, *dadurch gekennzeichnet, dass* das iterative Verfahren zur Ermittlung der Änderung der Entropie abschnittweise durchgeführt wird und die neue korrigierte Amplituden-funktion *AFneu(i)* aus der zweifach korrigierten Amplitudenfunktion *AFk2(i)* in den Abschnitten mit abnehmender Entropie und aus der einfach korrigierten Amplituden-funktion *AFk1(i)* in den Abschnitten mit zunehmender Entropie gebildet wird.

4. Verfahren nach einem oder mehreren der vorhergehenden Ansprüche,
   *dadurch gekennzeichnet, dass*
   der Schwellwert $S$

$$S = \begin{cases} s2 & s1 < d \wedge a < s2 < b \\ a & s1 < d \wedge s2 < a \\ c & s1 \geq d \\ b & s1 < d \wedge s2 > b \end{cases}$$

mit folgenden Werten für $a$, $b$, $c$ und $d$ ermittelt wird:

   - für $a$ Werte zwischen 1 und 2, vorzugsweise 1,5;
   - für $b$ Werte zwischen 2 und 4, vorzugsweise $b = 2a = 3,0$;
   - für $c$ Werte zwischen 1 und 3, vorzugsweise 2,0;
   - für $d$ Werte zwischen 5 und 20, vorzugsweise 7,0.

5. Verfahren nach einem oder mehreren der vorhergehenden Ansprüche,
   *dadurch gekennzeichnet, dass*
   die Konstanten $x$ und $y$ gleich gross, d.h. $x = y$, gewählt werden.

6. Verfahren nach einem oder mehreren der vorhergehenden Ansprüche,
   *dadurch gekennzeichnet, dass*
   die Konstanten $x$ und/oder $y$ Werte zwischen 5 und 15 erhalten, vorzugsweise gleich 10.

7. Verfahren nach einem oder mehreren der vorhergehenden Ansprüche,
   *dadurch gekennzeichnet, dass*
   mindestens 500, vorzugsweise 1000 bis 3000 Istwerte *AF(1...n)* pro Bauteil bestimmt werden.

8. Verfahren nach einem oder mehreren der vorhergehenden Ansprüche,
   *dadurch gekennzeichnet, dass*
   der Gauss-Filter zur Ermittlung der zweifach korrigierten Amplitudenfunktion *AFk2(i)* eine Grenzwellenlänge $L$ aufweist, die dem Prüfproblem angepasst ist und von der Anzahl $n$ der Messwerte abhängig ist.

9. Verfahren nach Anspruch 8, *dadurch gekennzeichnet, dass*
   der Gauss-Filter zur Ermittlung der zweifach korrigierten Amplitudenfunktion *AFk2(i)* eine Grenzwellenlänge $L$ von *8000/n* bis *12000/n,* vorzugsweise $L = 9100/n,$ worin $n$ die Anzahl der Messwerte ist.

**10.** Verfahren nach einem oder mehreren der vorhergehenden Ansprüche,
*dadurch gekennzeichnet, dass*
im ersten Korrekturprozess die Ermittlung der einfach korrigierten Amplitudenfunktion *AFk1(i)* durch lineare Interpolation der Istwerte eines Ausblendbereichs zwischen dem ersten Positionswert *u1* und dem zweiten Positionswert *u2* des Bereichs erfolgt.

**11.** Computerprogramm zur zerstörungsfreien Vermessung und Funktionsbeurteilung eines Bauteils durch rotatorische oder translatorische Relativbewegung zwischen einem Prüfkopf und dem Bauteil, insbesondere zur Prüfung der Bindung von Eingießteilen in Rotationsbauteilen, z.B. Kolben für Verbrennungsmotoren und andere Kolbenmaschinen, mit Ultraschall im Reflektions- oder Transmissionsverfahren, welches das in einem oder mehreren der Ansprüche 1 bis 11 definierte Verfahren kodiert.

**12.** Computerprogrammprodukt, insbesondere Speichermedium, , *dadurch gekennzeichnet, dass*
es ein Computerprogramm nach Anspruch 15 enthält.

**13.** System gestaltet zur Durchführung des Verfahrens nach mindestens einem der Ansprüche 1 bis 11 mit

- einer Vorrichtung zur Aufnahme eines Bauteils,
- mindestens einer Messsonde,insbesondere Ultraschallsonde, zur Abtastung des Bauteils bei relativer Bewegung, insbesondere Drehung des Bauteils zur Messsonde,
- einer Einrichtung zur Positions-, insbesondere Winkelbestimmung zwischen Messsonde und Bauteil, wobei diese Einrichtung auch als Zeitgeber ausgebildet sein kann, wenn eine konstante Bewegungs- bzw. Drehgeschwindigkeit des Bauteils gegenüber der Messsonde gegeben ist,
- einem Auswerterechner,

   - der Speichermittel zur Aufnahme von Messwerten und Programmen enthält oder mit solchen verbindbar ist und
   - mit der Messsonde und der Einrichtung zur Positions- bzw. Winkelbestimmung zur Aufnahme der positionsbzw. winkelbezogenen Istwerte verbindbar ist,

- und einer Ausgabe- oder Anzeigeeinrichtung zur Darstellung bzw. Auswertung der gemäss dem Verfahren ermittelten Ergebnisse,

wobei die Programme ein Computerprogramm nach Anspruch 11 enthalten.

**14.** System nach Anspruch 13, *dadurch gekennzeichnet, dass*

- die Vorrichtung zur Aufnahme eines Rotationsteils auf einem gegenüber der Messsonde starren, d.h. unverschiebbaren Grundplatte (8) drehbar und vorzugsweise ortsfest gelagert ist.

**15.** System nach Anspruch 13 oder 14, *dadurch gekennzeichnet, dass*

- der Messsonde mittels einer verstellbaren Haltevorrichtung derart angebracht ist, dass eine Abtastung des Bauteils in mindestens zwei Ebenen erfolgen kann.

**Claims**

**1.** Method for destruction-free measurement and functional assessment of the bonding of cast-in inserts or similar arrangements in components by rotary or translatory relative movement between a test head and the component, in particular for testing the bonding of cast-in inserts in rotary components, such as pistons for internal combustion engines and other piston machines, with ultrasound using the reflection or transmission method,
**characterised in that**
the position- and/or angle-dependent amplitude function AF1(i), which is determined during the measurement, with actual values AF(1...n), wherein AF is the value itself and i = 1...n is the position at which this value was measured, is subjected to an analytical process with the following steps:

A. in a first correction process, in order to suppress or interpolate the actual values of one or a plurality of suppressed ranges of the component, in which inhomogeneities of the surface, in particular interruptions, occur, wherein each suppressed range is defined by a first position value, the start number u1, and a second position value, the associated end number u2 of the range, a singly corrected amplitude function AFk1(i) is determined

$$AFk1(i) = \begin{cases} AF(i), & i < u1 \vee i > u2 \\ AF(u1) + \dfrac{i-u1}{u1-u2}(AF(u1) - AF(u2)), & u1 \le i \le u2 \end{cases};$$

B. in a second correction process, the disturbances caused by superposition of long-wave fractions are eliminated by the use of a Gaussian filter and thus a doubly corrected amplitude function AFk2(i) is determined;

C. an iterative method is used to determine the change in the entropy of the doubly corrected amplitude function AFk2(i) compared to the singly corrected amplitude function AFk1 (i) in such a manner that the singly corrected amplitude function AFk1(i) is converted into a first histogram with a given number of classes and the doubly corrected amplitude function AFk2(i) is converted into a second histogram with the given number of classes, that then for each histogram the number of classes is determined which are populated with a predefined number of measured values, and that the amplitude function whose histogram has the smaller number of classes populated with measured values and thus has the smaller entropy as a whole is selected as the new corrected amplitude function AFneu (i) for further processing;

D. a threshold value S is calculated, the exceeding of which when the reflection method is used or the undershooting of which when the transmission method is used by the amplitude values AFneu (i) at these points indicates an inoperative bonding at point/number i, wherein this threshold value is determined by

(I) the mean value m of all the AFneu (i) being calculated without the suppressed ranges between the position values u1 and u2 and any other suppressed ranges

$$m = \frac{1}{n-u2+u1} \sum_{i=0}^{i=n} AFneu(i), \, i < u1 \vee i > u2$$

(II) the following characteristic values s1 and s2 being determined:

$$s1 = \frac{1}{n-u2+u1} \sum_{i=0}^{i=n} \left| \left( \frac{1}{n-u2+u1} \sum_{i=0}^{i=n} AFneu(i) \right) - AFneu(i) \right|, \, i < u1 \vee i > u2$$

$$s2 = \frac{1}{n-u2+u1} \sum_{i=0}^{i=n} \left| \left( \frac{1}{n-u2+u1} \sum_{i=0}^{i=n} AFneu(i) \right) - AFneu(i) \right|, (i < u1 \vee i > u2) \wedge i \neq i_Q$$

wherein iQ indicates all the measurement locations for which AFneu (iQ) is greater than a first predefined percentage of all the remaining AFneu (i) and is smaller than a second predefined percentage of all the remaining AFneu (i) and

(III) the threshold value S being determined from it according to the following formula

$$S = \begin{cases} s2 & s1 < d \land a < s2 < b \\ a & s1 < d \land s2 < a \\ c & s1 \geq d \\ b & s1 < d \land s2 > b \end{cases}$$

wherein a, b, c and d are values which are selected as a function of the component to be measured and the bonding to be tested; and

E. the threshold value S and the mean value m are used to identify the amplitude values which indicate an inoperable bonding, wherein these are in particular those points/numbers i for which $AFneu\,(i) > m + xS$ in the reflection method, while these are in particular those points/numbers i for which $AFneu\,(i) < m - yS$ in the transmission method, wherein x and y are constants.

2. Method according to Claim 1, **characterised in that**
   instead of the second correction process using a Gaussian filter, a correction process using a double mean filter is carried out in such a manner that a first auxiliary function is determined from the corrected amplitude function $AFk1\,(i)$

$$H1(i) = \frac{1}{2L+1} \sum_{i-L}^{i+L} AFk1(j)$$

from which in a second step a second auxiliary function is determined

$$H2(i) = \frac{1}{2L+1} \sum_{i-L}^{i+L} H1(j)$$

and the doubly corrected amplitude function
$AFk2\,(i) = AFk1\,(i) - H2\,(i)$ is determined from the two auxiliary functions.

3. Method according to Claim 1 or 2, **characterised in that**
   the iterative method for determining the change in the entropy is carried out section by section and the new corrected amplitude function $AFneu\,(i)$ is formed from the doubly corrected amplitude function $AFk2\,(i)$ in the sections with decreasing entropy and from the singly corrected amplitude function $AFk1\,(i)$ in the sections with increasing entropy.

4. Method according to one or a plurality of the preceding claims, **characterised in that**
   the threshold value S

$$S = \begin{cases} s2 & s1 < d \land a < s2 < b \\ a & s1 < d \land s2 < a \\ c & s1 \geq d \\ b & s1 < d \land s2 > b \end{cases}$$

is determined with the following values for a, b, c and d:

- for a, values between 1 and 2, preferably 1.5;
- for b, values between 2 and 4, preferably b = 2a = 3.0;

- for c, values between 1 and 3, preferably 2.0;
- for d, values between 5 and 20, preferably 7.0.

5. Method according to one or a plurality of the preceding claims, **characterised in that**
   the constants x and y are selected to be equal, that is, x = y.

6. Method according to one or a plurality of the preceding claims, **characterised in that**
   the constants x and/or y have values between 5 and 15, preferably 10.

7. Method according to one or a plurality of the preceding claims, **characterised in that**
   at least 500, preferably 1000 to 3000 actual values AF(1...n) are defined per component.

8. Method according to one or a plurality of the preceding claims, **characterised in that**
   the Gaussian filter for determining the doubly corrected amplitude function AFk2 (i) has a limit wavelength L, which is adapted to the testing case and is dependent on the number n of measured values.

9. Method according to Claim 8, **characterised in that**
   the Gaussian filter for determining the doubly corrected amplitude function AFk2 (i) has a limit wavelength L of 8000/n to 12000/n, preferably L = 9100/n, with n being the number of measured values.

10. Method according to one or a plurality of the preceding claims, **characterised in that**
    in the first correction process the singly corrected amplitude function AFk1 (i) is determined by linear interpolation of the actual values of a suppressed range between the first position value u1 and the second position value u2 of the range.

11. Computer program for the destruction-free measurement and functional assessment of a component by means of rotary or translatory relative movement between a test head and the component, in particular for testing the bonding of cast-in inserts in rotary components, for example pistons for internal combustion engines and other piston machines, with ultrasound using the reflection or transmission method, which program codes the method defined in one or a plurality of Claims 1 to 11.

12. Computer program product, in particular storage medium, **characterised in that**
    it contains a computer program according to Claim 15.

13. System designed for carrying out the method according to at least one of Claims 1 to 11, with

    - an apparatus for holding a component,
    - at least one measuring probe, in particular ultrasound probe, for scanning the component during relative movement, in particular rotation of the component towards the measuring probe,
    - a device for determining the position, in particular angle, between the measuring probe and component, with it being possible for this device also to be configured as a timer if a constant movement or rotation speed of the component with respect to the measuring probe is given,
    - an evaluating computer,
    - which contains storage means for receiving measured values and programs or can be connected to one and
    - which can be connected to the measuring probe and the device for determining the position or angle for receiving the position- or angle-related actual values,
    - and an output or display device for presenting or evaluating the results determined according to the method,

    wherein the programs contain a computer program according to Claim 11.

14. System according to Claim 13, **characterised in that**

    - the apparatus for holding a rotary part is mounted in a rotatable and preferably stationary manner on a baseplate (8) which is rigid with respect to the measuring probe, that is, non-displaceable.

15. System according to Claim 13 or 14, **characterised in that**

    - the measuring probe is attached by means of an adjustable holding device in such a manner that scanning of the component can take place in at least two planes.

**Revendications**

1. Procédé pour le mesurage sans endommagement et l'évaluation de la fonction correspondant à la liaison de pièces à couler ou d'ensembles similaires dans des éléments de construction, par un mouvement de rotation ou de translation relatif entre une tête de contrôle et l'élément de construction, en particulier pour le contrôle de la liaison de pièces à couler dans des éléments rotatifs, par exemple des pistons pour moteurs à combustion et d'autres machines à pistons, avec ultrason par un procédé de réflexion ou de transmission,
**caractérisé en ce que**
la fonction d'amplitude *AF1(i)* calculée lors du mesurage, dépendante de la position et/ou de l'angle, avec valeur réelle *AF(1...n),* dans laquelle *AF* représente la valeur et *i = 1...n* représente la position où est mesurée cette valeur, est soumise à un processus de détermination comprenant les étapes suivantes :

A. une fonction d'amplitude *AFk1(i)* corrigée une fois est calculée au cours d'un premier processus de correction pour le masquage ou l'interpolation des valeurs réelles d'une ou de plusieurs zones de masquage de l'élément de construction, dans lesquelles apparaissent des défauts d'homogénéité de la surface, en particulier des interruptions, chaque zone de masquage étant définie par une première valeur de position, le numéro initial *u1,* et par une deuxième valeur de position, le numéro final u2 appartenant à la zone ;

$$AFk1(i) = \begin{Bmatrix} AF(i), & i < u1 \vee i > u2 \\ AF(u1) + \dfrac{i-u1}{u1-u2}(AF(u1) - AF(u2)), & u1 \le i \le u2 \end{Bmatrix};$$

B. au cours d'un deuxième processus de correction, les influences perturbatrices générées par la superposition d'éléments à ondes longues sont éliminées à l'aide d'un filtre gaussien, et une fonction d'amplitude doublement corrigée *AFk2(i)* est ainsi calculée ;
C. au moyen d'un procédé itératif, la variation de l'entropie de la fonction d'amplitude doublement corrigée *AFk2 (i)* par rapport à la fonction d'amplitude corrigée une fois *AFk1(i)* est déterminée de manière à ce que la fonction d'amplitude corrigée une fois *AFk1(i)* soit convertie en un premier histogramme, avec un nombre donné de classes, et à ce que la fonction d'amplitude doublement corrigée *AFk1(i)* soit convertie en un deuxième histogramme, avec le nombre de classes donné, **en ce que** par la suite, le nombre de classes occupées par un nombre prédéfini de valeurs de mesure est déterminé pour chaque histogramme, et **en ce que** la fonction d'amplitude dont l'histogramme présente le plus petit nombre de classes occupées par des valeurs de mesure et présentant donc la plus petite entropie est retenue comme nouvelle fonction d'amplitude corrigée *AFneu (i)* pour la suite du traitement ;
D. une valeur seuil S est calculée, dont le dépassement lors de l'application de la méthode de réflexion ou le passage en-dessous lors de l'application de la méthode de transmission par les valeurs d'amplitude *AFneu(i)* en ces points indique une liaison non opérationnelle au point/numéro *i*, cette valeur seuil étant déterminée en

(I) calculant la valeur moyenne m de toutes les fonctions *AFneu (i),* sans les zones de masquage entre les valeurs de position *u1* et *u2* et éventuellement sans d'autres zones de masquage,

$$m = \frac{1}{n-u2+u1} \sum_{i=0}^{i=n} AFneu(i), \; i < u1 \vee i > u2$$

(II) calculant les paramètres *s1* et s2 suivantes :

$$s1 = \frac{1}{n-u2+u1}\sum_{i=0}^{i=n}\left|\left(\frac{1}{n-u2+u1}\sum_{i=0}^{i=n} AFneu(i)\right) - AFneu(i)\right|, i<u1 \vee i>u2$$

$$s2 = \frac{1}{n-u2+u1}\sum_{i=0}^{i=n}\left|\left(\frac{1}{n-u2+u1}\sum_{i=0}^{i=n} AFneu(i)\right) - AFneu(i)\right|, (i<u1 \vee i>u2) \wedge i \neq i_Q$$

dans lesquels $iQ$ caractérisent tous les points de mesure, pour lesquels $AFneu(i)$ est supérieur à un premier pourcentage prédéfini de toutes les $AFneu(i)$ restantes, et

inférieur à un deuxième pourcentage prédéfini de toutes les $AFneu(i)$ restantes, et

(III) en calculant ainsi la valeur seuil S à l'aide de la formule suivants :

$$S = \begin{cases} s2 & s1<d \wedge a<s2<b \\ a & s1<d \wedge s2<a \\ c & s1 \geq d \\ b & s1<d \wedge s2>b \end{cases}$$

dans laquelle $a$, $b$, $c$ sont des valeurs choisies en fonction de l'élément de construction à mesurer et de la liaison examinée ; et

E. les valeurs d'amplitude indiquant une liaison non opérationnelle sont identifiées au moyen de la valeur seuil $S$ et de la valeur moyenne $m$, cela concernant particulièrement les points/numéros i pour lesquels vaut $AFneu(i) > xS$ avec la méthode de réflexion, tandis que cela concerne particulièrement les points/numéros i pour lesquels vaut $AFneu(i) < m - yS$ avec la méthode de transmission, où $x$ et $y$ sont des constantes.

2. Procédé selon la revendication 1, **caractérisé en ce qu'**au lieu du deuxième processus de correction au moyen d'un filtre gaussien, un processus de correction au moyen d'un double filtre de valeur moyenne est exécuté de manière à déterminer une première fonction auxiliaire à partir de la fonction d'amplitude corrigée $AFk1(i)$

$$H1(i) = \frac{1}{2L+1}\sum_{i-L}^{i+L} AFk1(j)$$

puis en déterminant une deuxième fonction auxiliaire au cours d'une deuxième étape

$$H2(i) = \frac{1}{2L+1}\sum_{i-L}^{i+L} H1(j)$$

puis en déterminant la fonction d'amplitude doublement corrigée $AFk2(i) = AFk1(i) - H2(i)$ à partir des deux fonctions auxiliaires.

3. Procédé selon l'une des revendications 1 ou 2, **caractérisé en ce que** le procédé itératif pour la détermination de la variation de l'entropie est exécuté par portions, et la nouvelle fonction d'amplitude corrigée $AFneu(i)$ est formée à partir de la fonction d'amplitude doublement corrigée $AFk2(i)$ dans les portions à entropie décroissante et à partir de la fonction d'amplitude corrigée une fois $AFk1(i)$ dans les portions à entropie croissante.

**4.** Procédé selon l'une ou plusieurs des revendications précédentes, **caractérisé en ce que** la valeur seuil $S$

$$S = \begin{cases} s2 & s1 < d \wedge a < s2 < b \\ a & s1 < d \wedge s2 < a \\ c & s1 \geq d \\ b & s1 < d \wedge s2 > b \end{cases}$$

est déterminée avec les valeurs suivantes pour $a$, b, c et d :

- valeurs entre 1 et 2 pour $a$, de préférence 1,5 ;
- valeurs entre 2 et 4 pour $b$, de préférence $b = 2a = 3{,}0$ ;
- valeurs entre 1 et 3 pour $c$, de préférence 2,0 ;
- valeurs entre 5 et 20 pour $d$, de préférence 7,0.

**5.** Procédé selon l'une ou plusieurs des revendications précédentes, **caractérisé en ce que** les constantes $x$ et $y$ sont choisies de manière à être identiques, c'est-à-dire $x = y$.

**6.** Procédé selon l'une ou plusieurs des revendications précédentes, **caractérisé en ce que** les constantes $x$ et/ou $y$ obtiennent des valeurs comprises entre 5 et 15, de préférence égales à 10.

**7.** Procédé selon l'une ou plusieurs des revendications précédentes, **caractérisé en ce que** au moins 500, de préférence entre 1000 et 3000, valeurs réelles $AF(1...n)$ sont déterminées par élément de construction.

**8.** Procédé selon l'une ou plusieurs des revendications précédentes, **caractérisé en ce que** le filtre gaussien pour la détermination de fonctions d'amplitude doublement corrigées $AFk2(i)$ présente une longueur d'onde limite $L$, qui est adaptée au problème de contrôle et dépend du nombre $n$ de valeurs de mesure.

**9.** Procédé selon la revendication 8, **caractérisé en ce que** le filtre gaussien pour la détermination de la fonction d'amplitude doublement corrigée $AFk2(i)$ présente une longueur d'onde limite L de 8000/n à 12000/n, de préférence L = 9100/n, où n est le nombre de valeurs de mesure.

**10.** Procédé selon l'une ou plusieurs des revendications précédentes, **caractérisé en ce que** au cours du premier processus de correction, la détermination de la fonction d'amplitude corrigée une fois $AFkl(i)$ est effectuée par l'interpolation linéaire des valeurs réelles d'une zone de masquage entre la première valeur de position $u1$ et la deuxième valeur de position $u2$ de la zone.

**11.** Programme informatique pour le mesurage sans endommagement et l'évaluation de la fonction d'un élément de construction, par un mouvement de rotation ou de translation relatif entre une tête de contrôle et l'élément de construction, en particulier pour le contrôle de la liaison de pièces à couler dans des éléments rotatifs, par exemple des pistons pour moteurs à combustion ou d'autres machines à pistons, permettant de codifier le procédé défini dans l'une ou plusieurs des revendications 1 à 11.

**12.** Produit de programme informatique, en particulier un support de stockage, **caractérisé en ce que** il contient un programme informatique selon la revendication 15.

**13.** Système conçu pour l'exécution du procédé selon au moins l'une des revendications 1 à 11, avec

- un dispositif pour l'admission de l'élément de construction,
- au moins une sonde, en particulier une sonde à ultrason, pour l'exploration d'un élément de construction lors d'un mouvement relatif, en particulier lors de la rotation de l'élément de construction par rapport à la sonde,
- un dispositif pour la détermination de la position et en particulier de l'angle entre la sonde et l'élément de construction, ce dispositif pouvant également être conçu comme un indicateur de temps, lors d'une vitesse constante du mouvement ou de la rotation de l'élément de construction par rapport à la sonde,
- un calculateur d'évaluation,
- contenant des moyens de stockage pour l'enregistrement de valeurs de mesure et de programmes ou pouvant être relié à ceux-ci et
- pouvant être relié à la sonde et au dispositif pour la détermination de la position ou de l'angle, pour la réception des valeurs réelles dépendantes de la position ou de l'angle,
- et un dispositif d'émission ou d'indication pour la représentation ou l'évaluation des résultats déterminés selon le procédé, les programmes contenant un programme informatique selon la revendication 11.

**14.** Système selon la revendication 13, **caractérisé en ce que**

- le dispositif pour l'admission d'une pièce rotative sur une plaque de base (8) fixe, c'est-à-dire immobile, est installé de façon rotative et de préférence à un emplacement fixe.

**15.** Système selon l'une des revendications 13 ou 14, **caractérisé en ce que**

- la sonde est montée de telle façon au moyen d'un dispositif de maintien réglable, qu'une exploration de l'élément de construction est réalisable au moins dans deux zones.

Ultraschallgerät

Auswerterechner

Ultraschallsonde

Tauchbecken
mit flüssigem
Medium

zu prüfende
Bindungsfläche

Schallwellen

Bauteil
(Kolben)

Halterung für
Ultraschallsonden

Aufnahme für
Bauteil, rotierend

**Fig. 1**

Ultraschallsonde

Ultraschallwellen

Grenzfläche mit zu
prüfender Bindung

Eingießteil mit zu
prüfender Grenzfläche

Bauteil mit
Eingießteil im
Schnitt
(Kolben)

**Fig. 2a**

Draufsicht
(Kolben)

geprüfte Grenzfläche
über den gesamten
Umfang (schraffiert)

**Fig. 2b**

Fig. 3a

Fig. 3b

Fig. 4a

Fig. 4b

Fig. 5a

Fig. 5b

```
                    ┌─────────────────────┐
                    │         A.          │
                    │     1. Korrektur    │
                    │       AFk1(i)       │
                    └──────────┬──────────┘
                               │
                               ▼
                    ┌─────────────────────┐
                    │         B.          │
                    │     2. Korrektur    │
                    │       AFk2(i)       │
                    └──────────┬──────────┘
                               │
                               ▼
┌──────────────────┐ ┌─────────────────────┐ ┌──────────────────┐
│      D(II)       │ │         C.          │ │       D(I)       │
│   Kenngrössen  ◄─┤ │     Iteration       ├─►│    Mittelwert    │
│    s1 und s2     │ │      AFneu(i)       │ │        m         │
└────────┬─────────┘ └─────────────────────┘ └──────────────────┘
         │
         ▼
┌──────────────────┐
│      D(III)      │
│   Schwellwert    │
│        S         │
└────────┬─────────┘
```

E. Ergebnis

$AFneu(i) > m + xS$
oder
$AFneu(i) < m - yS$

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5618994 A
- US 4036057 A
- WO 2005009220 PCT, Fichtinger